# EUROPEAN PATENT SPECIFICATION

(11) **EP 0 710 670 B1**
(45) Date of publication and mention of the grant of the patent: **14.06.2000**
(21) Application number: 94830524.8
(22) Date of filing: 03.11.1994
(51) Int. Cl.: C08B 31/00, C13K 1/06

(54) **A method of modifying starch**
Verfahren zur Modifizierung von Stärke
Procédé pour modifier l'amidon

(43) Date of publication of application: 08.05.1996
(73) Proprietor: VOMM IMPIANTI E PROCESSI S.r.L., 20089 Rozzano (Milano) (IT)
(72) Inventor: Vezzani, Corrado, I-20146 Milano (IT)
(74) Representative: Ferreccio, Rinaldo

(56) References cited:
- EP-A- 0 538 653
- US-A- 3 114 656
- US-A- 3 527 606
- US-A- 4 216 310
- STARKE., vol.34, no.12, 1 December 1984, WEINHEIM DE pages 402 - 405 G.E.H. JOOSTEN ET AL. 'Some Aspects of the Continuous Production of Low-Acetylated Potato Starch'

## Description

The present invention relates, in general, to a method for the continuous chemical modification of starch.

The great interest shown by many branches of industry in the availability of raw materials based on modified starches, and consequently in methods for the chemical modification of starch which can be carried out on an industrial scale, is well known.

Thus, for example, it is known that the textile and paper industries have a particular interest in hydrolytic treatments of starch to produce starch sizing of a suitably low viscosity.

It is also known that suitable hydrolytic treatment of starch, again on an industrial scale, can produce dextrin, maltose and glucose, which have other important technical uses.

Further chemical modifications of starch which are of industrial interest are esterification and etherification reactions which give rise to products such as starch acetate, starch hydroxyethylate, starch hydroxypropylate and other simple or mixed ethers and esters. As is well known, these products are widely used in the food industry as gelling or thickening agents, in the textile industry as sizing, and in the paper industry for improving printability, surface strength and the solvent-resistance of paper.

The methods of the prior art for the chemical modification of starch on an industrial scale are generally based on batch processing of starch in an aqueous solution or in the presence of a large quantity of water.

In fact, according to the prevalent teaching of the prior art, this is the only method in which optimal contact between the hydroxylic groups of the starch and the agents used for its chemical modification can be achieved in an industrially advantageous and valuable manner.

However, although, on the one hand the aforementioned technical teaching enables a chemically modified and industrially acceptable starch to be produced, on the other hand, it has the recognized disadvantage of producing enormous quantities of aqueous refluent, the disposal of which results in a considerable burden on production and running costs.

Moreover, the methods of the prior art have to be carried out discontinuously (in batches) which, as is well known, has an adverse effect on their control and on the overall economy of the method.

Us 3,527,606 discloses a process of modifying starch in particulate form in a cooker chamber which comprises the steps of mechanically agitating the starch to form a nebulized suspension of starch particles within the chamber, maintaining starch particles in a turbulized suspension by subjecting them to a centrifugal force of at least about 1g, and impacting said starch particles against the wall of the chamber to effect heat transfer between the particles and the wall to effect modification thereof.

In the publication Die Stärke Vol. 34 (1982) Dec., No 12, pages 402-405, it is disclosed a process for the acetylation of potato starch by vinylacetate in suspension in various types of continuous flow reactors. The reactor used are a cascade of four mixing vessels, each of equal size, and a tubular reactor.

EP 0538653 discloses a machine for processing material in general by centrifuging and thermal treatment having a casing defining an internal processing chamber housing a rotor with blades, the casing being provided with means for heating or cooling its walls.

In order to satisfy the requirement for easy, fast and complete access to the processing chamber, the casing is made up of at least two elements fixed to each other so as to be movable apart.

The technical problem upon which the present invention is based is that of providing a method for the chemical modification of starch which avoids the problems listed above with reference to the methods of the prior art.

This problem is solved, according to the invention, by a method for the continuous chemical modification of starch, characterized in that it comprises the steps of:
- supplying a continuous flow of starch in powder form having a moisture content of between 9 and 25% into a turbo-reactor comprising a cylindrical, tubular body with a horizontal axis, having openings for the admission of agents and for the outlet of the final product, a bladed rotor supported for rotation in the cylindrical, tubular body, in which it is rotated at speeds within the range of from 600 to 1500 revolutions/minute, so as to disperse the continuous flow of starch into a flow of starch particles and, possibly a heating or cooling jacket for bringing the internal wall of the tubular body to a predetermined temperature,
- supplying at least one continuous flow of an aqueous solution of at least one starch-modification agent into the turbo-reactor, with the same direction of flow as the starch flow, said aqueous solution being mechanically nebulized upon admission to the turbo-reactor,
- centrifuging the starch particles and the modification agent against the internal wall of the turbo-reactor, forming a thin, tubular, dynamic, highly turbulent, fluid layer in which the starch particles and the modification agent are kept mechanically in intimate contact by the blades of the bladed rotor, and
- reacting the starch and the agent in the thin layer whilst it advances substantially in contact with the internal wall towards the outlet opening of the turbo-reactor.

The extreme turbulence which is maintained mechanically in the fluid layer by the bladed rotor prevents the very small drops of starch-modification agent from coalescing, favouring the completion of the desired reaction.

In fact, in connection with the completion of the starch-modification reaction, it should be noted that, according to the present invention, the reagents, (starch powder and agents for the chemical modification thereof) are no longer "dispersed" in an aqueous medium, but in an aeriform (or gaseous) medium of which the humidity is very low. The modification reaction achieved according to the method of the invention leads to the production, with a yield of practically 100%, of a reaction product (modified starch) which is constituted by a dry powder having a moisture content no greater than 25% by weight and does not involve the production of any aqueous refluent as occurred, on the other hand, with the methods of the prior art.

The method of the invention advantageously enables all of the starch-modification reactions currently known to be carried out. In particular, it is possible to carry out acid hydrolysis of starch to various degrees, acetylation, etherification to produce valuable compounds such as methyl, ethyl, propyl, butyl starch, carboxymethyl starch, carboxyethyl starch, oxyethyl starch, oxypropyl starch, esterification, carboxylation by phosgenation, and the like.

In particular, when used to hydrolyse starch, the method of the invention can be carried out with the use, as the starch-modification agent, of an aqueous solution of a strong acid which is nebulized mechanically upon admission to the turbo-reactor.

The strong acid used is preferably hydrochloric acid.

The method of the invention may advantageously be carried out with the use, as the starch-modification agent, of an alkylation agent selected from the group comprising C₁₋₄ alkyl halides, C₁₋₄ alkyl sulphates, halo-C₂₋₄-alkanoic acids, C₂₋₄ alkylene epoxides.

Acylation agents such as those selected from the group comprising C₂₋₄ acyl halides, anhydrides of C₂₋₄ alkanoic acids and phosgene may effectively be used in the method of the invention.

If one of the aforementioned reactions requires the supply of heat (or the removal of heat) this can be achieved by the suitable heating (or cooling) of the internal wall of the turbo-reactor along which the thin, tubular, fluid layer of starch particles moves. For this purpose, the cylindrical, tubular body of the turbo-reactor will have one or more jackets through which a heating or cooling fluid is intended to flow.

The advantages and characteristics of the invention will become clearer from the following description of some examples of the implementation of the chemical starch-modification method, given below with reference to equipment shown schematically in the single appended drawing, which is provided purely by way of indication.

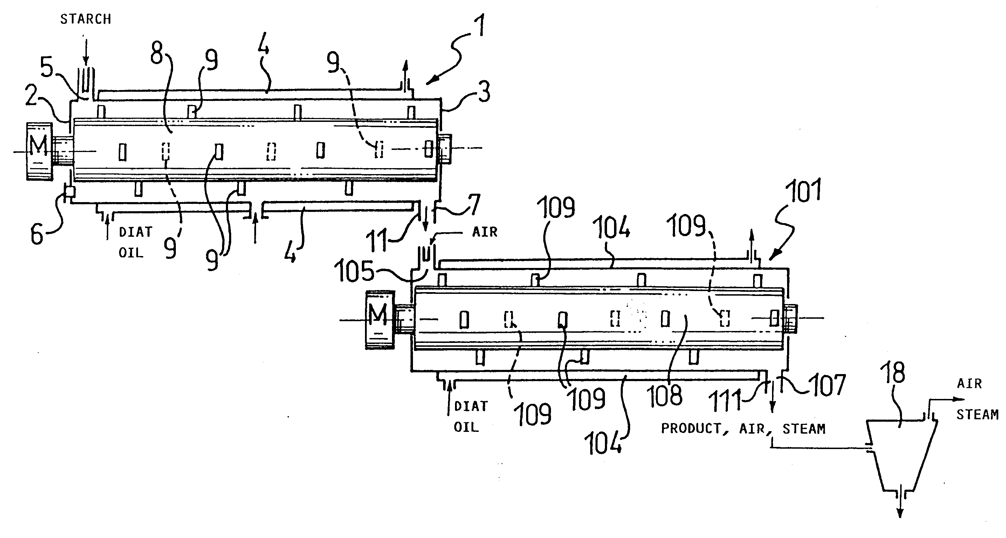

With reference to the drawing, equipment used for the chemical starch-modification method of the invention comprises a turbo-reactor constituted essentially by a cylindrical, tubular body 1, closed at its opposite ends by end plates 2, 3 and having a coaxial heating (or cooling) jacket 4 through which a fluid, for example, diathermic oil, is intended to flow to keep the internal wall of the body 1 at a predetermined temperature.

The tubular body 1 has openings 5, 6 for the admission of the starch to be modified chemically and of the modification agents used, respectively, as well as an opening 7 for the outlet of the chemically modified starch.

A bladed rotor 8 is supported for rotation in the tubular body 1, its blades 9 being disposed in a helical arrangement and being oriented for centrifuging and simultaneously trasporting towards the outlet the reagents and the reaction products respectively.

A motor M is provided for driving the bladed rotor at speeds which may vary from 600 to 1500 revolutions/minute.

If the product (modified starch) discharged from the turbo-reactor requires further drying, the outlet opening 7 of the turbo-reactor communicates, by means of a duct 11, with the inlet opening 105 of a turbo-drier which is not described in detail since it has a structure just like that of the turbo-reactor mentioned above. The components of the turbo-drier which are similar to those of the turbo-reactor are indicated by the same reference numerals increased by 100.

### EXAMPLE 1

A continuous flow of maize starch in powder form was supplied at a flow rate of 120 kg/h to the turbo-reactor 1 in which the bladed rotor 8 was rotated at a speed of 700 revolutions/minute and in which the internal wall was kept at a regulated temperature of about 50°. 25 kg/h of a 0.63% aqueous solution of hydrochloric acid was simultaneously supplied continuously through the opening 6.

Immediately upon admission to the turbo-reactor 1, the flow of starch powder was dispersed mechanically into starch particles which were immediately centrifuged against the internal wall of the turbo-reactor where they formed a thin, tubular and dynamic, fluid layer. At the same time, the aqueous solution of hydrochloric acid was mechanically nebulized finely by the blades of the rotor 8 which also immediately centrifuged the very small drops produced. These were thus introduced into the thin, tubular, fluid layer of starch particles with which they could "interact".

After a period of about 30 seconds spent in the turbo-reactor, an acid-modified starch which had a moisture content of 25% was discharged continuously from the opening 7.

This acid-modified starch was supplied continuously to the turbo-drier 13 together with a flow of hot air at a temperature of 160°C having the same direction of flow as the acid-modified starch.

The wall temperature in the turbo-drier 13 was regulated to a value of 120°C, whilst the speed of rotation of the bladed rotor was kept constantly at 900 revolutions/minute.

After 5 minutes spent in the turbo-drier, acid-modified starch having a relative moisture content of 11% was discharged continuously therefrom.

### EXAMPLE 2

With the use of the equipment described schematically above and following the method of the invention, maize starch in powder form was supplied continuously into the turbo-reactor 1 through the inlet opening 5 at a flow rate of 120 kg/h. At the same time a 6.9% aqueous solution of NaOH was supplied continuously with the same direction of flow, at a flow rate of 2.5 kg/h, through the opening 6. Ethylene oxide was supplied to the same turbo-reactor 1 about half-way along the latter, with a flow rate of 95 kg/h, equal to 0.254 m³/h.

The wall temperature was regulated at a value of about 50°C, whilst the speed of rotation of the bladed rotor was kept constantly at 600 revolutions/minute.

After about 30 seconds spent in the turbo-reactor, oxyethylated starch with a degree of substitution of 0.1 was discharged continuously through the opening 7.

The oxyethylated starch was supplied continuously to the turbo-drier 13 where it was treated in the experimental conditions used in Example 1.

At the output of the turbo-drier, oxyethylated starch with a relative moisture content of 11% was obtained and was sent continuously through the duct 17 to a cyclone separator 18.

### EXAMPLE 3

The method of Example 2 was repeated with the use of propylene oxide instead of ethylene oxide, all of the experimental conditions being kept unchanged.

At the output of the turbo-reactor, oxypropyl starch was obtained with quantitative yields, having a degree of substitution of 0.1 and a relative moisture content of 25%. The oxypropyl starch was dried in the turbo-drier in the experimental conditions used in the previous examples, giving a final product having a relative moisture content of 11%.

## Claims

1. A method for the continuous chemical modification of starch, characterized in that it comprises the steps of:
- supplying a continuous flow of starch in powder form having a moisture content of between 9 and 25% into a turbo-reactor comprising a cylindrical, tubular body (1) with a horizontal axis, having openings (5,6) for the admission of agents and for the outlet of the final product, a bladed rotor (8) supported for rotation in the cylindrical, tubular body (1), in which it is rotated at speeds within the range of from 600 to 1500 revolutions/minute, so as to disperse the continuous flow of starch into a flow of starch particles and, possibly a heating or cooling jacket (4) for bringing the internal wall of the tubular body (1) to a predetermined temperature,
- supplying at least one continuous flow of an aqueous solution of at least one starch-modification agent into the turbo-reactor with the same direction of flow as the starch flow, said aqueous solution being mechanically nebulized upon admission to the turbo-reactor,
- centrifuging the starch particles and the modification agent against the internal wall of the turbo-reactor forming a thin, tubular, dynamic, highly turbulent, fluid layer in which the starch particles and the modification agent are kept mechanically in intimate contact by the blades (9) of the bladed rotor (8), and
- reacting the starch and the agent in the thin layer whilst it advances substantially in contact with the internal wall towards the outlet opening (7) of the turbo-reactor.

2. A method according to Claim 1, characterized in that the chemical starch-modification product which is discharged from the turbo-reactor is subsequently dried in a turbo-drier.

3. A method according to any one of Claims 1 and 2, characterized in that said aqueous solution is an aqueous solution of a strong acid.

4. A method according to Claim 3, characterized in that the strong acid is hydrochloric acid.

5. A method according to any one of Claims 1 and 2, characterized in that said aqueous solution is an aqueous solution of NaOH, and in that a continuous flow of ethylene oxide is also supplied to the turbo-reactor with the same direction of flow.

6. A method according to any one of Claims 1 and 2, characterized in that said aqueous solution is an aqueous solution of NaOH, and in that a continuous flow of propylene oxide is also supplied to the turbo-reactor with the same direction of flow.

## Patentansprüche

1. Verfahren zur kontinuierlichen chemischen Modifizierung von Stärke, gekennzeichnet durch die Schritte:
- Zuführen eines kontinuierlichen Stärkestroms in Pulverform mit einem Feuchtigkeitsgehalt von 9 bis 25%, in einen Turboreaktor, der ein zylindrisches, röhrenförmiges Gehäuse (1) mit einer waagerechten Achse enthält, welcher Ein- und Auslaßöffnungen (5,6) für die Zufuhr von Substanzen und den Abfluß des Endproduktes enthält, ein Schaufelrad (8), welches sich im zylindrischen, röhrenförmigen Gehäuse (1) bei Geschwindigkeiten im Bereich von 600 bis 1500 Umdrehungen/min. dreht und dadurch den kontinuierlichen Stärkestrom in einen Strom von Stärkepartikel zerstreut und gegebenenfalls einen Heiz- oder Kühlmantel (4) umfaßt, welcher die Innenwand des röhrenförmigen Gehäuses (1) auf eine vorbestimmte Temperatur bringt,
- Zuführen von mindestens einem kontinuierlichen Strom einer wässrigen Lösung mindestens eines die Stärke modifizierenden Mittels in den Turboreaktor mit der gleichen Fließrichtung wie der Stärkestrom, wobei die wässrige Lösung mechanisch zerstäubt wird nach Eintritt in den Turboreaktor,
- Zentrifugieren der Stärkepartikel und des die Stärke modifizierenden Mittels gegen die Innenwand des Turboreaktors unter Bildung einer dünnen, röhrenförmigen, dynamischen, hoch turbulenten flüssigen Schicht, in welcher die Stärkepartikel und das die Stärke modifizierende Mittel über die Schaufeln (9) des Schaufelrades (8) mechanisch in innigem Kontakt gehalten werden, und
- Umsetzung der Stärke und des Mittels in der dünnen Schicht, während sich diese in beträchtlichem Kontakt mit der Innenwand in Richtung der Auslaßöffnung (7) des Turboreaktors bewegt.

2. Verfahren nach Anspruch 1, dadurch gekennzeichnet, daß das chemische stärke-modifizierte Produkt, welches aus dem Turboreaktor ausströmt, anschließend in einem Turbotrockner getrocknet wird.

3. Verfahren nach einem der Ansprüche 1 oder 2, dadurch gekennzeichnet, daß die wässrige Lösung eine wässrige Lösung einer starken Säure ist.

4. Verfahren nach Anspruch 3, dadurch gekennzeichnet, daß die starke Säure Salzsäure ist.

5. Verfahren nach einem der Ansprüche 1 und 2, dadurch gekennzeichnet, daß die wässrige Lösung eine wässrige Lösung von NaOH ist, und ein kontinuierlicher Strom von Ethylenoxid dem Turboreaktor mit der selben Stromrichtung ebenfalls zugeführt wird.

6. Verfahren nach einem der Ansprüche 1 und 2, dadurch gekennzeichnet, daß die wässrige Lösung eine wässrige Lösung von NaOH ist, und ein kontinuierlicher Strom von Propylenoxid dem Turboreaktor mit der selben Stromrichtung ebenfalls zugeführt wird.

## Revendications

1. Procédé de modification chimique en continu de l'amidon, caractérisé en ce qu'il comprend les étapes consistant à :
- fournir un courant continu d'amidon sous forme de poudre et possédant un taux d'humidité compris entre 9 et 25% dans un turbo-réacteur comprenant un corps cylindrique tubulaire (1) muni d'un axe horizontal et possédant des ouvertures (5,6) pour l'admission d'agents et pour la sortie du produit final, un rotor à pales (8) supporté en rotation dans le corps cylindrique tubulaire (1), dans lequel il est soumis à une rotation avec une vitesse comprise entre 600 et 1500 tours par minute, de façon à disperser le courant continu d'amidon sous forme d'un courant de particules d'amidon et, éventuellement une chemise (4) de chauffage ou de refroidissement destinée à porter le paroi interne du corps tubulaire (1) à une température prédéterminée,
- fournir au moins un courant continu d'une solution aqueuse d'au moins un agent de modification de l'amidon dans le turbo-réacteur avec la même direction de courant que le courant d'amidon, ladite solution aqueuse étant nébulisée mécaniquement au niveau de l'admission dans le turboréacteur,
- centrifuger les particules d'amidon et l'agent de modification contre le paroi interne du turbo-réacteur, de façon à former une couche fluide mince, tubulaire, dynamique, hautement turbulente, au sein de laquelle les particules d'amidon et l'agent de modification sont maintenus mécaniquement en contact intime par les pales (9) du rotor à pales (8), et
- faire réagir l'amidon et l'agent au sein de la couche mince pendant qu'elle avance, substantiellement en contact avec la paroi interne, vers l'ouverture de sortie (7) du turbo-réacteur.

2. Procédé selon la revendication 1, caractérisé en ce que le produit issu de la modification chimique de l'amidon sortant du turbo-réacteur est soumis à une étape ultérieure de séchage dans un turbo-sécheur.

3. Procédé selon l'une quelconque des revendications 1 et 2, caractérisé en ce que ladite solution aqueuse est une solution aqueuse d'un acide fort.

4. Procédé selon la revendication 3, caractérisé en ce que l'acide fort est l'acide chlorhydrique.

5. Procédé selon l'une quelconque des revendications 1 et 2, caractérisé en ce que ladite solution aqueuse est une solution aqueuse de NaOH, et en ce qu'un courant continu d'oxyde d'éthylène est également fourni au turbo-réacteur dans la même direction de courant.

6. Procédé selon l'une quelconque des revendication 1 et 2, caractérisé en ce que ladite solution aqueuse est une solution aqueuse de NaOH, et en ce qu'un courant continu d'oxyde de propylène est également fourni au turbo-réacteur dans la même direction de courant.
